(19) Europäisches Patentamt
European Patent Office
Office européen des brevets

(11) EP 2 466 186 A1

(12) EUROPEAN PATENT APPLICATION

(43) Date of publication:
20.06.2012 Bulletin 2012/25

(21) Application number: 10195461.8

(22) Date of filing: 16.12.2010

(51) Int Cl.:
F17C 1/00 (2006.01)     F17C 5/06 (2006.01)
F17C 9/02 (2006.01)     F17C 13/02 (2006.01)
B67D 1/00 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Air Products and Chemicals, Inc.
Allentown, PA 18195-1501 (US)

(72) Inventors:
• Downie, Neil Alexander
Odiham, RG29 1JN (GB)
• Mercer, Christopher John
Ash, GU12 6LH (GB)

(74) Representative: Stones, James Alexander
Beck Greener
Fulwood House
12 Fulwood Place
London WC1V 6HR (GB)

(54) **A process for filling a gas storage container**

(57)     A gas storage container may be filled with gas under pressure by feeding cryogenic fluid comprising liquefied gas into the container through a first conduit arrangement in a nozzle inserted into a passageway through a fluid flow control unit mounted in an opening in said container; closing the container to the passage of gas into or out of said container; and allowing said cryogenic fluid to become gaseous within the closed container. The invention involves venting displaced air and/or gaseous cryogenic fluid from said container during the feeding step through a second conduit arrangement in the nozzle. In embodiments in which displaced air and/or gaseous cryogenic fluid flows through the second conduit arrangement around a length of the first conduit arrangement, heat transfer from the fluid flow control unit to said cryogenic fluid is suppressed thereby reducing the level of evaporation of the cryogenic fluid in the nozzle during fill.

FIG. 2

# Description

The present invention relates to a process for filling gas storage containers with gas under pressure. The gas storage containers are typically gas cylinders for storing and/or dispensing gas, including gas mixtures, under pressure, usually high pressure, e.g. at least 100 bar.

It is known to charge a gas cylinder with a predetermined amount of a cryogenic liquid, close the gas cylinder to the passage of gas into or out of the cylinder, and then allow the cryogenic liquid to evaporate in order to fill the cylinder with a gas under a desired pressure. Such a filling process generally has at least two advantages; first, the process consumes significantly less (e.g. of the order of 100 times less) energy than a process involving direct compression of the gas, and secondly, the process is much quicker (e.g. of the order of one or two minutes).

Unfortunately, such direct injection processes are not suitable for filling standard high pressure cylinders, which are made of steel and which become dangerously embrittled at cryogenic temperatures. To address this issue, it has been proposed to inject the cryogenic liquid into a thin walled inner vessel provided within the cylinder thereby isolating from cryogenic liquid from the walls of the cylinder.

US 1,414,359 (published in May 1922) discloses a steel gas cylinder containing an internal, thin walled auxiliary vessel for receiving liquefied gas. At the upper end of the auxiliary vessel, immediately under the valve head, there is a row of holes to provide gas flow communication between inside the inner vessel and the remainder of the cylinder interior. The auxiliary vessel may be attached to the conical stopper at the top of the cylinder, or to a conical stopper arranged in the base of the cylinder. The auxiliary vessel may be formed from a pipe of soft expansible metal inserted through the neck of the cylinder and inflated by air or hydraulic pressure to the required extent. The size of the auxiliary vessel may be selected to accommodate sufficient liquefied gas to fill several steel cylinders with compressed gas. It is disclosed that the steel cylinder is preferably put in a water bath during charging and subsequent evaporation of the liquefied gas to limit the extent to which the walls of the cylinder cool down, and that excessive cooling of the cylinder must be avoided under all circumstances so as not to go below the lower limit of ductility of the steel.

US 1,414,359 discloses that the charging of the thin-walled vessel is carried out in the usual way by means of a siphon or a funnel, and that the inlet for filling the vessel is opened by unscrewing the small valve head, or that the filling is done through a special valve with a bore of a corresponding width.

US 3,645,291 A (published in February 1972) discloses a gas cylinder within the cavity of which is provided an inner vessel to receive liquefied gas charged to the cylinder to isolate the liquefied gas from the walls of the cylinder to ensure slower and more even evaporation of the liquefied gas. The inner vessel is provided with gas outlet means to allow gas to pass into the reminder of the cylinder cavity on evaporation. The cylinder has a neck which is provided with an inner vessel constituted by a downward extension of the neck and an otherwise closed liquefied gas-receiving vessel into which the extension opens. The extension is provided with at least one radially extending hole through which gas can flow into and out of the remainder of the cylinder cavity. It is disclosed that the inner vessel is constructed of cryogenically acceptable material such as Mylar™ foil, and that since the walls of the gas should not come into contact with the liquefied gas, the cryogenic requirements of the material of the wall are somewhat less than the requirements of the inner vessel. In the exemplified embodiment, the inner vessel comprises an aluminium tube supporting a closed Mylar™ bag. It is disclosed that liquefied nitrogen, liquefied oxygen or liquefied argon may be charged to the cylinder, typically in sufficient quantity to generate a gas at a pressure of 1,800 lb/in$^2$ (124 bar).

US 3,645,291 A discloses a valve mounted within the neck of the gas cylinder having a first passageway to receive a probe for charging the inner vessel with cryogenic liquid; a first valve means for opening and closing the first passageway; a second passageway for permitting gas to be drawn off from the cylinder; and a second valve means for controlling the rate at which gas passes through the second passageway. Cryogenic liquid is charged to the inner vessel by inserting the tip of a probe into the first passageway, thereby opening the first valve means, and then allowing a certain amount of cryogenic liquid to flow through the probe. The probe is then removed and the cylinder sealed by closure of the first valve means.

The system disclosed in US 3,645,291 A has not been developed and is understood to have now been abandoned due to problems with the short life and robustness of the Mylar™ bag, and detection of bag failure. In addition, there are difficulties inherent in filling the bag. For example, as the bag fills with cryogenic liquid, the liquid begins to boil causing some of the liquid being injected to be forced back out of the cylinder.

GB 2,277,370 A (published in October 1994) exemplifies a gas cylinder having a coating on the inner surface thereof of heat insulation material such as high density expanded polystyrene. The gas cylinder is in fluid flow communication with a bank of empty cylinders for filling. In use, the lined cylinder is filled with cryogenic liquid and allowed to evaporate. The gas so produced then fills the bank of empty cylinders with gas under pressure. In this way, a 50 L (water) capacity cylinder when insulated would hold about 38 L of liquid nitrogen which, if hydrostatically full, is equivalent to about 3 cylinders at 200 bar, or 6 cylinders at 100 bar.

GB 2,277,370 A discloses that the lined gas cylinder is fitted with a three-way valve which allows the cylinder to fill with liquid by allowing boil-off gas to bleed out during the filling operation through an outlet and an open ullage valve.

The system disclosed in GB 2,277,370 A has several drawbacks. For example, there are inherent difficulties in lining the inside of a cylinder. In addition, a substantial volume of foam containing gas, volatile or particulate materials, or other contaminants is left inside the cylinder from previous fills which could end up contaminating gas of otherwise very high purity.

Heat transfer from filling equipment to the cryogenic liquid is a problem since a part of the cryogenic liquid boils as a result of the heat transfer during the filing operation. Boiling results in a loss of cryogenic liquid which in turn may result in less liquid being charged to the container than intended, or having to charge more liquid to the container in order to the correct amount is charged. In addition, "boil-off", i.e. cryogenic liquid that has evaporated and is in gaseous form, can cause back flow of cryogenic liquid being fed to the container (or "blow back") and "spitting" of the cryogenic liquid which is a health and safety hazard. These problems have been addressed to a certain extent in the art by allowing boil-off to be vented with displaced air through a separate valve, e.g. the customer valve or a bleed valve, and by using a thin walled equipment to minimise heat transfer. However, the problems are not overcome entirely by these measures, particularly with gas container having only a single gas flow path into and out of the gas storage container.

It is an object of the present invention to provide a new process for filling a gas storage container with gas under pressure which preferably overcomes one or more of the disadvantages of prior art processes.

It is an object of preferred embodiments of the present invention to suppress boiling of a cryogenic liquid being charged to a gas storage container.

It is a further object of preferred embodiments of the present invention to inhibit blow back of cryogenic fluid as a result of displaced air and/or gaseous cryogenic liquid, particularly in gas containers having only a single flow path to control gas flow into and out of the container.

It is another object of preferred embodiments of the present invention to simplify the process for filling gas storage containers, particularly gas containers having more than one flow path to control gas flow into and out of the containers.

According to a first aspect of the present invention, there is provided a process for filling a gas storage container with gas under pressure, said process comprising the steps of:

feeding cryogenic fluid comprising liquefied gas into a gas storage container through a first conduit arrangement in a nozzle inserted into a passageway through a fluid flow control unit mounted in an opening in said container;
closing said container to the passage of gas into or out of said container; and

allowing said cryogenic fluid to become gaseous within said closed container, wherein, during said feeding step, displaced air and/or gaseous cryogenic fluid is vented from said container through a second conduit arrangement in said nozzle.

Typically, the process is for use in filling a gas storage container comprising an outer vessel defining an interior space for holding gas under pressure, the outer vessel comprising an opening for receiving a fluid flow control unit; and a fluid flow control unit mounted within the opening for controlling fluid flow into and out of the outer vessel, the fluid flow control unit comprising a passageway through which cryogenic fluid may be fed to the container. The passageway may be opened and closed manually using a pressure cap or alike although, in preferred embodiments, the passageway has a valve located at the end of the passageway inside the container that is biased in the closed position by a spring.

The process may comprise opening the passageway by removing the pressure cap, and then inserting a nozzle into the open passageway and feeding the cryogenic fluid into the container. Alternatively, the process may comprise opening the passageway by inserting the nozzle with the end of the nozzle pushing open the valve against the spring.

Once the required amount of cryogenic fluid has been fed to the container, the nozzle is removed from the passageway which may then be closed by spring-action on the valve, or by replacing the pressure cap.

Filling of containers according to the present invention is easier and more reliable with less wastage that with known cylinders that are filled by charging with cryogenic liquid, as little or no cryogenic fluid is forced back out of the fluid flow control unit during injection of the cryogenic fluid by displaced air and/or gaseous cryogenic fluid.

In addition, since displaced air and/or gaseous cryogenic fluid is vented from the container through the same passageway as the cryogenic fluid is fed to the container, the present process may be used to fill containers having only a single passageway through the fluid flow control unit.

Further, the filling process is simpler for containers having dual (or more) passageways through the fluid flow control unit since it is no longer necessary to separately have to open and close the customer valve to provide a vent for the displaced air and/or gaseous cryogenic fluid.

Preferably, air displaced from inside the container flows around a length of the first conduit arrangement. Such flow has the effect of suppressing heat transfer from the fluid flow control unit to the cryogenic fluid. This effect is more pronounced in embodiments in which initial cryogenic fluid charged to the container evaporates or otherwise becomes gaseous to provide gaseous cryogenic fluid since the gaseous cryogenic fluid tends to be cooler than the air in the container.

The second conduit arrangement preferably defines an at least substantially annular flow path around the length of the first conduit arrangement around which displaced air and/or gaseous cryogenic fluid flows. An annular flow path maximises the heat transfer suppression effect of the countercurrent flow of displaced air and/or gaseous cryogenic fluid.

In preferred embodiments, the second conduit arrangement engages the passageway of the fluid flow control unit such that venting of displaced air and/or gaseous cryogenic fluid through the passageway outside the second conduit arrangement is prevented. For example, the dimensions (or shape) of the second conduit arrangement preferably match the dimensions (or shape) of the passageway such that, once the nozzle is inserted in the passageway, there is no significant gap if any between the nozzle and the wall of the passageway. The wall of the passageway may be cylindrical or tapered towards the inside of the container.

The first conduit arrangement is typically formed of a material that is resistant to embrittlement at cryogenic temperature. The second conduit arrangement is preferably formed of a material that is resistant to embrittlement at cryogenic temperatures.

The nozzle typically comprises an inner tube (i.e. the first conduit arrangement) within an outer tube (i.e. the second conduit arrangement). The inner and outer tubes are typically coaxial. Since the cryogenic fluid is usually fed through the inner tube, the wall of the inner tube is typically thin to reduce heat transfer to the cryogenic fluid. The wall of the inner tube typically has a thickness from about 100 μm to about 2 mm, e.g. about 1 mm. The inner tube may be made from a polymeric material such as polytetrafluoroethylene (PTFE), or a metal such as copper, stainless steel or aluminium. The wall of the outer tube is usually a little thicker since it is typically handled by the operator and it protects the inner tube. The outer tube typically has a thickness from about 1 mm to about 3 mm, e.g. about 2 mm. The outer tube may be made from a metal such as stainless steel.

The present invention may be applied to any type of container for storing and/or dispensing gas under pressure, such as gas tanks or other gas storage vessels. The gas storage container typically comprises an outer vessel defining an interior space for holding a gas mixture under pressure, said outer vessel comprising an opening for receiving a fluid flow control unit; and a fluid flow control unit mounted within said opening for controlling fluid flow into and out of the outer vessel.

The present invention has particular application to gas cylinders, e.g. high pressure gas cylinders made from, for example, steel or aluminium. In some preferred embodiments, the container is a single gas cylinder. In other preferred embodiments, the container is a central "primary" cylinder in parallel gas flow communication with a plurality of "secondary" cylinders in a multi-cylinder pack. In such embodiments, the outer vessel of the central cylinder is usually made from aluminium, and the outer vessel of each secondary cylinder is usually made from steel.

The gas storage container may be a cylinder having an inner surface lined with heat insulation material. A suitable example of such a cylinder is described in GB 2,277,370, the disclosure of which is incorporated herein by reference. However, the gas storage container is preferably unlined.

The gas storage container may also comprise at least one inner vessel provided within said interior space, said inner vessel(s) defining a part of said interior space for holding the liquid/solid mixture in spaced relationship with said outer vessel and being in fluid flow communication with a remaining part of said interior space. Such an arrangement prevents embrittlement of the outer vessel.

In these embodiments, the cryogenic fluid is fed through the first conduit arrangement to the inner vessel(s) inside the container. The container is then sealed and the cryogenic fluid is then allowed to become gaseous thereby filling the container, and any secondary containers associated therewith, with gas under pressure. The inner vessel(s) not only isolate the cryogenic fluid from the outer wall of the container (thereby preventing embrittlement of the container), but since they tend to be thin walled also reduce the rate of boiling and provide more uniform boil off.

The or each inner vessel is preferably "loose-fitting", i.e. not fixedly mounted within the container.

The or each inner vessel is preferably "thin-walled" since the inner vessel(s) is exposed only to isostatic pressure. The or each inner vessel usually has a base and enclosing wall(s) that are sufficiently thick such that the inner vessel is able to support itself when containing cryogenic fluid. The thickness of the base and enclosing wall(s) depend on the material from which the inner vessel is made but, typically, the base and wall(s) of the inner vessel(s) have a thickness from about 0.1 mm to about 10 mm, preferably from about 0.25 mm to about 5 mm. For example, where an inner vessel is made from a metal, e.g. steel, aluminium or nickel, the thickness of the base and wall(s) is typically no more than about 2 mm, e.g. from about 1 mm to about 2 mm. In addition, where the inner vessel is made from a polymeric material, e.g. silicone or polyester film, the thickness of the base and the wall(s) is typically a little more, e.g. less than about 5 mm, e.g. from about 1.5 mm to about 4 mm.

The or each inner vessel is preferably in the form of an "open-topped" or "open-ended" can, i.e. a vessel having a base and an enclosing wall, typically (although not necessarily) circular, provided substantially perpendicular to the base. The mouth of such an inner vessel is the open end. In some embodiments, the open end of said can is in the form of an inverted cone.

The gas storage container preferably comprises at least one support for supporting the inner vessel(s) in said spaced relationship with respect to said outer vessel. Any suitable support may be used such as spacer arms and/or legs for the inner vessel(s), or a support base on which the inner vessel(s) sits. The support(s) may be (although are not necessarily) fixed to the inner vessel(s). The or each support is usually made from a cryogenic resistant material, and typically has a low heat transfer coefficient. Suitable materials include plastics and polymers, but packing material may also be used.

The container may comprise a plurality of inner vessels. For example, each inner vessel may be a long thin-walled pipe having a closed bottom end and an open top end forming the mouth. The diameter of the pipe may be more than the diameter of the opening of the outer vessel (in which case, the pipes would be introduced into the outer vessel prior to enclosure) or less than that diameter of the opening in the outer vessel (in which case, each pipe could be inserted into the outer vessel via that opening).

In preferred embodiments, the container comprises a single inner vessel. In such embodiments, the mouth of the inner vessel preferably has a diameter that is greater than that of said opening. The diameter of the mouth of the inner vessel may be at least 100 % greater, preferably at least 200 % greater, e.g. at least 400 % greater, than that of the opening. The diameter of the mouth of the inner vessel may be up to about 99 % of the internal diameter of the outer vessel.

The or each inner vessel is usually self-supporting, even when charged with cryogenic fluid. The inner vessel(s) may be rigid, i.e. self-supporting and possibly resistant to deformation. Alternatively, the or at least one of the inner vessels may be deformable. In such embodiments, the or each inner vessel may be deformed, e.g. by rolling, folding or crushing, and then inserted into the container through the opening in the outer vessel. The or each inner vessel may then be unfurled inside the container using gas pressure or hydraulic pressure. Alternatively, in embodiments where the or each inner vessel is resilient, the inner vessel resumes its original shape unaided inside the container. In this connection, either the inner vessel is made from a resilient material or the inner vessel comprises an inherently resilient, or "spring-loaded", frame supporting a deformable sheet material forming the base and walls of the vessel.

Since it is to be charged with cryogenic fluid, the or each inner vessel is typically made from a material that is resistant to embrittlement at the cryogenic temperatures to which it will be exposed. Suitable materials include specific metals, e.g. aluminium; nickel; and steel, for example, stainless steel; and polymeric materials, e.g. silicones such as catalytically set silicone and polydimethylsiloxanes; polyesters such as polyethylene terephthalate (PET or Mylar™); polyethylenes such as polytetrafluoroethylene (PTFE); and perfluorinated elastomers (PFE).

The inner vessel may comprise at least one aperture, in addition to the mouth, for providing additional gas flow communication between the part of the interior space defined by the inner vessel and the remaining part of the interior space defined by the outer vessel. Such aperture(s) would typically be provided in the wall of the inner vessel, above the maximum level of cryogenic fluid to be charged to the vessel. However, in preferred embodiments, the mouth is preferably the sole opening in the or each inner vessel.

The term "spaced relationship" is intended to mean spaced apart from or having a gap therebetween. Thus, in the present invention, there the outer vessel is spaced apart from the inner vessel(s) such that the cryogenic fluid charged to the inner vessel(s) is isolated from the outer vessel by a gap provided therebetween. The gap is usually more than 1 mm, and preferably more than 5 mm.

The term "open" is intended to mean at least not entirely closed. Thus, in the present invention, the mouth is at least not entirely closed and, preferably entirely open, to the remaining part of the interior space. In preferred embodiments, the mouth is free of direct attachment to any part of the container, particularly the fluid flow control unit.

The mouth of the or each inner vessel is preferably in spaced relationship with respect to the fluid flow control unit.

The interior space typically has a top half and a bottom half. The extent to which the inner vessel extends into the bottom half or top half of the interior space depends on the amount of cryogenic fluid to be charged to the inner vessel. The or each inner vessel may extend from the bottom half into the top half of the interior space. For example, in embodiments in which the container is the central primary cylinder in a multi-cylinder pack, the inner vessel may extend essentially from near the bottom of the interior space to the top, or up to 90% of the length of the interior space. However, in embodiments in which the container is an individual gas cylinder, the inner vessel is preferably provided entirely within the bottom half, or even bottom third, of the interior space.

Certain preferred containers for storing and/or dispensing gas under pressure are disclosed in co-pending European patent application No. (to be advised) and identified under APCI Docket No. 07492 EPC, the disclosure of which is incorporated herein by reference.

The term "under pressure" is intended to mean that the gas is at a pressure that is significantly above atmospheric pressure, e.g. at least 40 bar. The gas storage container is typically suitable for storing and/or dispensing gas up to a pressure of about 500 bar. Usually, the container is suitable for storing and/or dispensing gas at a pressure of at least 100 bar, e.g. at least 200 bar, or at least 300 bar.

Gas storage containers according to the present invention are suitable for storing and/or dispensing a pure gas or a gas mixture. The containers have particular application in storing and/or dispensing a pure gas that may be liquefied, or a gas mixture having at least a major component that may be liquefied, and charged to the inner vessel(s) in the form of a cryogenic fluid comprising liquefied gas.

Suitable gases include permanent gases. Examples of suitable gases include oxygen ($O_2$), hydrogen ($H_2$), nitrogen ($N_2$), helium (He), argon (Ar), neon (Ne), krypton (Kr), xenon (Xe) and methane ($CH_4$). Examples of suitable gas mixtures include welding gases, e.g. gas mixtures containing $N_2$ or Ar, together with carbon dioxide ($CO_2$) and, optionally, $O_2$; breathing gases, e.g. air; "nitrox" ($O_2$ and $N_2$); "trimix" ($O_2$, $N_2$ and He); "heliox" (He and $O_2$); "heliair" ($O_2$, $N_2$ and He); "hydreliox" (He, $O_2$ and $H_2$); "hydrox" ($H_2$ and $O_2$); and "neonox" ($O_2$ and Ne); anaesthetic gases, e.g. gas mixtures comprising $O_2$ and nitrous oxide ($N_2O$); and "beer" gases or gases for use in pubs and bars to help dispense beer from pressurised metal kegs, e.g. gas mixtures comprising $CO_2$ and $N_2$.

The "cryogenic fluid" comprises liquefied gas and may be a liquefied pure gas, a mixture of liquefied gases, or a liquid/solid mixture comprising liquefied first gas and solidified second gas, typically in the form of a cryogenic slurry or slush.

In some preferred embodiments, the cryogenic fluid is a cryogenic liquid such as liquid oxygen (LOX), liquid hydrogen, liquid nitrogen (LIN), liquid helium, liquid argon (LAR), liquid neon, liquid krypton, liquid xenon, and liquid methane, or appropriate mixtures thereof necessary to form a particular gas mixture.

In other preferred embodiments, the cryogenic fluid is a liquid/solid mixture comprising liquefied first gas and solidified second gas. The liquefied first gas may be one or more of the cryogenic liquids listed above, and the solidified second gas is typically solid $CO_2$ or $N_2O$, as appropriate to form a particular gas mixture.

A suitable liquid/solid mixture is typically stable for at least 10 mins, preferably at least 30 mins, and more preferably up to 1 hour, at ambient pressure, e.g. from about 1 to about 2 bar. The term "stable" in this context means that the mixture may be handled at ambient pressure without significant loss of one of more of the components.

The liquid/solid mixture is typically fluid enabling the mixture to be poured, pumped/piped along a conduit, and valved. Depending on the relative proportions of liquefied gas(es) and solidified gas(es), the consistency and appearance of the mixture may range from a thick, creamy substance (not unlike whipped cream or white petrolatum) to a thin, milky substance. The range of viscosity of the mixture is typically from about 1 cPs (for thin, milky mixtures) to about 10,000 cPs (for thick, creamy mixtures). The viscosity may be from about 1,000 to about 10,000 cPs. Preferably, the mixture is composed of finely divided solid particles suspended in a liquid phase. The liquid/solid mixture may be described as a cryogenic slurry or slush.

The Inventors have observed that, when a liquid argon/solid carbon dioxide mixture is allowed to warm to ambient temperature, the liquid argon evaporates first to leave a substantial amount of the solid carbon dioxide behind which then gradually sublimes. A uniformly blended argon/carbon dioxide mixture is formed by diffusion of the gases within the container. The Inventors expect that other liquid/solid mixtures containing solid carbon dioxide will behave in a similar manner.

The relative proportions of the liquid and solid components in the mixture are dictated by the desired gas mixture and by the desire for the mixture to have fluid characteristics. In preferred embodiments, there is from about 40 wt % to about 99 wt % liquid component(s) and from about 1 wt % to about 60 wt % solid component(s).

The identities of the first and second gases will be dictated by the gas mixture filling the container. Examples of suitable gas mixtures for use with the present invention include welding gases; "beer" gases; anaesthetic gases; and fire extinguishing gases.

Suitable welding gases include nitrogen/carbon dioxide mixtures (e.g. from about 80 wt % to about 95 wt % nitrogen and from about 5 wt % to about 20 wt % carbon dioxide), and argon/carbon dioxide mixtures (e.g. from about 80 wt % to about 95 wt % argon and from about 5 wt % to about 20 wt % carbon dioxide). Oxygen may replace some of the nitrogen or argon gas in such welding gas mixtures. Thus, the welding gases may contain from 0 wt % to about 5 wt % oxygen.

A particularly suitable welding gas contains from about 80 wt % to about 90 wt % argon, from 0 wt % to about 5 wt % oxygen, and from about 5 wt % to about 20 wt % carbon dioxide. An example of a suitable welding gas contains about 2.5 wt % oxygen, from about 7 wt % to about 20 wt % carbon dioxide with the balance (from about 77.5 wt % to about 90.5 wt %) being argon.

Suitable "beer" gases include nitrogen/carbon dioxide mixtures (e.g. from about 40 wt % to about 70 wt % nitrogen and from about 30 wt % to about 60 wt % carbon dioxide).

Suitable anaesthetic gases include oxygen/nitrous oxide mixtures (e.g. from about 65 wt % to about 75 wt % oxygen and from about 25 wt % to about 35 wt % nitrous oxide).

Suitable fire extinguishing gases include nitrogen/carbon dioxide mixtures (e.g. in a weight ratio of 1:1).

The first gas may therefore be selected from the group consisting of nitrogen; argon; and oxygen. Other suitable gases include helium; neon; xenon; krypton; and methane.

The second gas is typically stable in solid form at ambient pressure. The term "stable" in this context means that the solid form of the second gas does not become gaseous (either by sublimation, or by melting and evaporation) unduly rapidly at ambient pressure so that the solid form may be handled easily under these conditions. The second gas is typically selected from the group consisting of carbon dioxide and nitrous oxide.

The liquid/solid mixture may be a binary mixture of a liquefied gas and a solidified gas. However, the liquid/solid mixture may be a mixture of more than one liquefied gas and one solidified gas, or a mixture of one liquefied gas and more than one solidified gas. In some preferred embodiments, the liquid/solid mixture comprises a liquefied third gas. The liquefied third gas may be immiscible with the liquefied first gas but, in preferred embodiments, the liquefied first and third gases are miscible with each other.

In preferred embodiments in which the gas storage container is filled with a welding gas, the liquefied first gas is liquid argon, and the solidified second gas is solid carbon dioxide. In such embodiments, the liquid/ solid mixture may also comprise liquid oxygen which is miscible with liquid argon. Thus, the liquid/solid mixture may comprise from about 80 to about 90 wt % liquid argon; from 0 to about 5 wt % liquid oxygen; and from about 5 to about 20 wt % solid carbon dioxide.

Suitable cryogenic liquid/solid mixtures are disclosed in co-pending European patent application No. (to be advised) and identified by APCI Docket No. 07493 EPC, the disclosure of which is incorporated herein by reference.

Charging the cryogenic fluid to the inner vessel (s) of a single container usually takes no more than 1 min and may take a little as 10 to 20 s. The container usually takes less than 1 h to become fully pressurised with a pure gas.

As would be readily appreciated by the skilled person, where a gas storage container is to be filled with a pure gas under pressure, the quantity of cryogenic liquid to be fed, or charged, to the inner vessel(s) can be calculated using the ideal gas equation, viz:

$$PV = nRT$$

where P is the desired pressure of the gas in the container; V is the volume of the container; n is the number of moles of gas; R is the gas constant; and T is the absolute temperature.

Once a particular container is selected, V and the maximum P are known, as is R and the ambient temperature. The value of n may then be calculated thus:

$$n = PV/RT$$

The number of moles, n, of gas is then converted into mass, M, of gas in grams (g) by multiplying by the molecular weight, A:

$$M = nA$$

For real gases at pressure above say 50 bar, there are corrections to be added to this basic formula which depend upon the attractive and repulsive forces between molecules, and the finite and different size of molecules. These corrections can be taken account of by including a factor Z, the "compressability" of the gas, in the equation:

$$PV = nRTZ$$

Tabulations exist for many gases over a wide range of pressures and temperatures, and complex approximate formulae exist for some gases.

The calculation may be adapted as appropriate to determine the amount of a mixture of two or more cryogenic liquids, or of a liquid/solid mixture comprising a liquefied first gas and a solidified second gas, that would be required to fill a gas storage container with a gas mixture under pressure.

The amount of cryogenic fluid fed to the container may be controlled in different ways. For example, a given amount of fluid may be measured out (either by weight or volume) and that amount added to the container. Such a method may typically be used for small scale operations such as for filling single cylinders. Alternatively, the flow of a cryogenic fluid into the container may be metered (either by volume using a flowmeter, or by weight using a scale) until the required amount has been fed to the cylinder at which point the flow into the container is stopped, or otherwise interrupted. Such a method may typically be used on larger scale operations such as for continuous filling of a plurality of cylinders.

According to a second aspect of the present invention, there is provided a nozzle for use in a process as defined in the first aspect. The nozzle is suitable for insertion in a passageway through a flow control unit mounted in an opening in a gas storage container, and comprises a first conduit arrangement for feeding cryogenic fluid into the container, and a second conduit arrangement for venting displaced air and/or gaseous cryogenic fluid from the container.

According to a third aspect of the present invention, there is provided apparatus for filling a gas storage container with gas under pressure. The apparatus comprise a source of cryogenic fluid comprising liquefied gas; a nozzle for feeding cryogenic fluid into a gas storage container via a passageway through a flow control unit mounted in an opening in said container; and a conduit arrangement for feeding cryogenic fluid from the source to the nozzle. The nozzle comprises a first conduit arrangement for feeding cryogenic fluid into the container, and a second conduit arrangement for venting displaced air and/or gaseous cryogenic fluid from the container.

The source of the cryogenic fluid may be any type of reservoir of the fluid. For example, for small scale filling operations, the source may be a small container such as a small tank or bucket, or the hopper of a modified funnel having a sleeve mounted around the spout. For larger scale filling operations, the source may be a larger tank. In such larger scale operations, the cryogenic fluid may be pumped from the tank, using a pump or static head, along a conduit to the nozzle.

In preferred embodiments of the apparatus, at least a portion of the first conduit arrangement is within the second conduit arrangement. Preferably, the second conduit arrangement defines an at least substantially annular flowpath around a length of the first conduit arrangement.

The second conduit arrangement preferably engages the passageway in the fluid flow control unit of the container such that venting of displaced air and/or gaseous cryogenic fluid through the passageway outside the second conduit arrangement is prevented.

The first conduit arrangement preferably extends into an inner vessel inside the container.

The following is a description, by way of example only and with reference to the accompanying drawings, of presently preferred embodiments of the present invention. Regarding the drawings:

> Figure 1A is a longitudinal cross-sectional representation of an embodiment of a nozzle according to the present invention;
> Figure 1B is a horizontal cross-sectional representation of the nozzle of Figure 1A through the plane indicated by line A-A; and
> Figure 2 is a schematic cross-sectional representation of the nozzle of Figure 1 in use with a gas storage container.

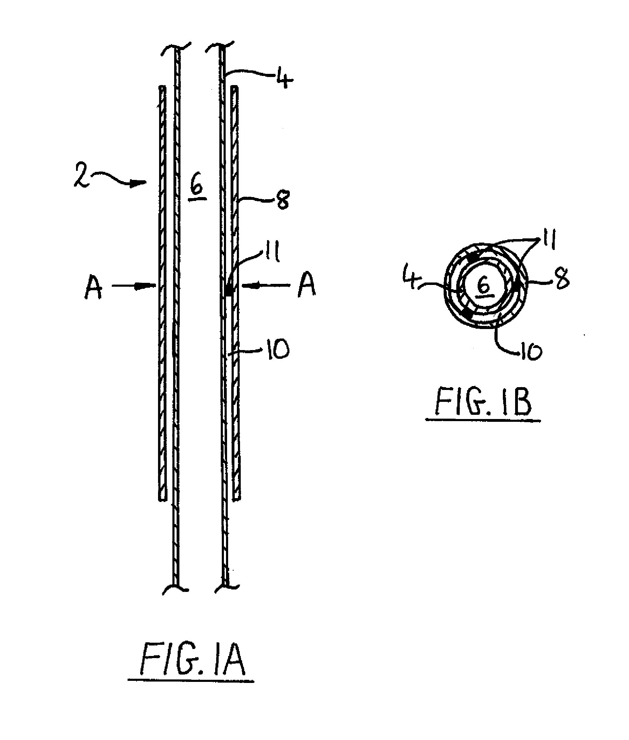

Regarding Figures 1A and 1B, nozzle 2 comprises a first conduit 4 defining a first passageway 6 for feeding cryogenic fluid comprising liquefied gas into a gas storage container (not shown). The first conduit 4 is provided co-axially within a second conduit 8 thereby defining an annular passageway 10 between the first conduit 4 and the second conduit 8 for venting displaced air and/or gaseous cryogenic fluid from the gas storage container (not shown) during charging with cryogenic fluid.

The first conduit 4 is a PTFE tube. The first conduit 4 has a thin wall such that, in use, heat transfer from the wall to the cryogenic fluid is reduced. The thickness of the wall of the first conduit 4 is about 1 mm. The second conduit 8 is a stainless steel tube having a wall thickness of about 2 mm. The first conduit 4 and second conduit 8 are connected using a series of connections 11.

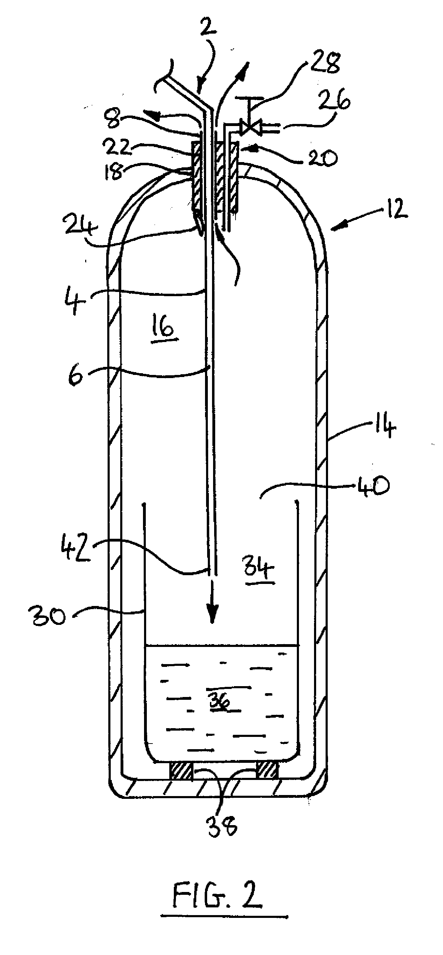

The nozzle 2 of Figure 1A and 1B is depicted in use in Figure 2. A gas cylinder 12 has an outer vessel 14 defining an interior space 16 for holding gas under pressure. The outer vessel 14 is made from steel and has an opening 18 for receiving a fluid flow control unit 20 for controlling fluid flow into and out of the cylinder 12. The fluid flow control unit 20 has a fluid fill inlet 22, and a customer outlet 26 having a control valve 28. The fluid fill inlet 22 is a passageway through the fluid flow control unit 20 that is closed at the end of the passageway inside the cylinder 12 by a valve 24 biased in the closed position by a spring. The fluid flow control unit 22 typically has a pressure relief valve (not shown).

An inner vessel 30 made from aluminium is provided entirely within the bottom half of the interior space 16. The inner vessel 30 defines a part 34 of the interior space 16 for holding cryogenic fluid 36 in spaced relationship with respect to the outer vessel 14. A support 38 provides the spaced relationship between the inner vessel 30 and the outer vessel 14. The inner vessel 30 has a mouth 40 for receiving cryogenic fluid from the fluid flow control unit 20 via the first conduit 4 of the nozzle 2. The end 42 of the first conduit 4 extends below the mouth 40 of the inner vessel 30, thereby ensuring that spray from the conduit 4 is caught by the inner vessel 30. The end 42 of the conduit 4 does not usually extend so far below the mouth 40 of the inner vessel 30 such that it would be below the surface of the cryogenic fluid 36 after the inner vessel 30 has been charged with the fluid.

The mouth 40 is open to the remaining part of the interior space 16 and thereby provides fluid flow communication between the inner vessel 30 and the remaining part of the interior space 16.

The cylinder 12 is filled by inserting the nozzle 2 into the fluid inlet 22 of the fluid flow control unit 20. The end 42 of the first conduit 4 pushes open the valve 24 against the spring, and the nozzle 2 is pushed into the cylinder 12 until the second conduit 8 engages the passageway of the fluid inlet 22. The end 42 of the first conduit 4 is below the mouth 40 of the inner vessel 30. Cryogenic fluid is fed down the first conduit 4 via flow path 6 into the inner vessel 30. The cryogenic fluid begins to evaporate and/or sublime (depending on the nature of the fluid) as soon as it comes into contact with the inner vessel 30 due to heat transfer. Displaced air, cooled by gaseous cryogenic fluid, is vented from the cylinder 12 via the annular passageway 10 defined by the second conduit 8, as indicated by the arrows in the figure.

The amount, e.g. volume or mass, of cryogenic fluid to be fed to the cylinder 12 is calculated on the basis of the target pressure of the gas in the cylinder (and, hence, the volume of the cylinder, and the densities of the cryogenic fluid and the gas), and feed to the cylinder is controlled to ensure that the correct amount of cryogenic fluid is added.

Once the required amount of cryogenic fluid has been added to the cylinder 12, the nozzle 2 is removed from fluid inlet 22, thereby allowing valve 24 to close. The cryogenic fluid is then allowed to become gaseous by evaporation, and where appropriate sublimation, thereby filling the cylinder 12 with gas to the desired pressure.

EXAMPLE

A 23.5 L steel gas cylinder having a large (40 mm) neck was equipped with a fluid flow control unit having a liquid filling aperture and tube, a customer valve and a safety relief valve. A Mylar™ bag was connected to the liquid filling tube and provided inside the cylinder. The resultant cylinder and internals are similar to the type described in US 3,645,291.

The system was pre-cooled with LIN before filling. After pre-cooling, 4 L of LIN was charged to the bag through the central tube in a nozzle having coaxial flowpaths as depicted in Figures 1A and 1B. The customer valve was open when the LIN was poured in, and then both the customer valve and the liquid filling aperture closed after the LIN had been poured in. The pressure and temperature of the cylinder were then logged over time. Substantially all of the LIN boiled after about 28 mins.

The experiment was then repeated using a 23.5 L steel gas cylinder of the type depicted in Figure 1. The inner vessel 22 was made from catalytically set silicone. The inner vessel 22 was rolled up and inserted into the cylinder through the neck. After insertion, the inner vessel 22 resumed its original shape unaided. The inner vessel 22 rested on some packing material to prevent contact with the cylinder wall and base. As before, the pressure and temperature of the cylinder were logged over time and the Inventors noted that substantially all of the LIN boiled after about 37 mins.

The experiment was then repeated using the cylinder containing the internal bag which was charged with a liquid argon/solid carbon dioxide slurry. A slurry containing 97 wt % liquid argon/7 wt % solid carbon dioxide was prepared by spraying liquid carbon dioxide from a nozzle on to the surface of a vented tank of liquid argon. After sufficient carbon dioxide had been added, the resultant slurry was checked for free-flowing characteristic and colour. An opaque white watery liquid was achieved.

The system was pre-cooled with LIN before filling. After pre-cooling, about 4.2 litres (6 litres total with a loss of 1.8 litres due to blow back and spitting, etc.) of the mixture was poured through the nozzle into the bag. The customer valve was open when the mixture was poured in, and then both the customer valve and the liquid filling aperture closed after the mixture had been poured in. The pressure and temperature of the cylinder were then logged over time. Carbon dioxide content was measured every few hours over several days until it returned to an equilibrium value of 7%.

The Inventors expect that the loss of mixture due to blow back and spitting, etc. would be significantly reduced if the mixture is charged to an internal can in the base of the cylinder.

Advantages of the present invention include:

- suppression of blow back of cryogenic fluid being fed to a container due to displaced air, thereby improving safety and accuracy of fill, and reducing wastage;

- suppression of heat transfer from the fluid flow control unit to the cryogenic fluid during fill, thereby further reducing blow back of cryogenic fluid;
- permitting containers having a single fluid flow path to be filled simply and efficiently; and
- simplifying filling operations for containers having more than one fluid flow path since no other valves have to be operated to vent the displaced air and/or gaseous cryogenic fluid.

It will be appreciated that the invention is not restricted to the details described above with reference to the preferred embodiments but that numerous modifications and variations can be made without departing form the spirit or scope of the invention as defined in the following claims.

**Claims**

1. A process for filling a gas storage container with gas under pressure, said process comprising the steps of:

   feeding cryogenic fluid comprising liquefied gas into a gas storage container through a first conduit arrangement in a nozzle inserted into a passageway through a fluid flow control unit mounted in an opening in said container;
   closing said container to the passage of gas into or out of said container; and
   allowing said cryogenic fluid to become gaseous within said closed container, wherein, during said feeding step, displaced air and/or gaseous cryogenic fluid is vented from said container through a second conduit arrangement in said nozzle.

2. A process as claimed in Claim 1, wherein said displaced air and/or gaseous cryogenic liquid flows around a length of said first conduit arrangement to suppress heat transfer from said fluid flow control unit to said cryogenic liquid.

3. A process as claimed in Claim 2, wherein said second conduit arrangement defines an at least substantially annular flowpath around said length of said first conduit arrangement.

4. A process as claimed in Claim 2 or Claim 3, wherein said second conduit arrangement engages said passageway such that venting of displaced air and/or gaseous cryogenic fluid through said passageway outside the second conduit arrangement is prevented.

5. A process as claimed in any of the preceding claims, wherein said cryogenic fluid is fed through said first conduit arrangement to at least one inner vessel inside said container.

6. A process as claimed in any of the preceding claims, wherein said cryogenic fluid is a liquid/solid mixture comprising a liquefied first gas and a solidified second gas.

7. A process as claimed in Claim 6 wherein said liquefied first gas is selected from the group consisting of nitrogen ($N_2$); argon (Ar); and oxygen ($O_2$); and mixtures thereof.

8. A process as claimed in Claim 6 or Claim 7, wherein said solidified second gas is selected from the group consisting of carbon dioxide ($CO_2$); and nitrous oxide ($N_2O$).

9. A process as claimed in any of Claims 6 to 8, wherein said liquid/solid mixture comprises, based on the final composition:

 from about 80 to about 90 wt % liquid argon;
 from 0 to about 5 wt % liquid oxygen; and
 from about 5 to about 20 wt % solid carbon dioxide.

10. A nozzle for use in a process as defined in any of the preceding claims.

11. Apparatus for filling a gas storage container with gas under pressure, said apparatus comprising:

 a source of cryogenic fluid comprising liquefied gas;
 a nozzle for feeding cryogenic fluid into a gas storage container via a passageway through a flow control unit mounted in an opening in said container; and
 a conduit arrangement for feeding cryogenic fluid from said source to said nozzle,
 wherein said nozzle comprises a first conduit arrangement for feeding cryogenic fluid into said container, and a second conduit arrangement for venting displaced air and/or gaseous cryogenic fluid from said container.

12. Apparatus as claimed in Claim 11, wherein at least a portion of said first conduit arrangement is within said second conduit arrangement.

13. Apparatus as claimed in Claim 11 or Claim 12, wherein said second conduit arrangement defines an at least substantially annular flowpath around a length of said first conduit arrangement.

14. Apparatus as claimed in any of Claims 11 to 13, wherein said second conduit arrangement engages said passageway such that venting of displaced air and/or gaseous cryogenic fluid through said passageway outside the second conduit arrangement is prevented.

15. Apparatus as claimed in any of Claims 11 to 14, wherein said first conduit arrangement extends into an inner vessel inside said container.

2

6

4

8

11

A → ← A

10

FIG. 1A

11

4

6

8

10

FIG. 1B

FIG. 2

Europäisches
Patentamt

European
Patent Office

Office européen
des brevets

**EUROPEAN SEARCH REPORT**

**Application Number**

EP 10 19 5461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 680 620 A1 (AIR LIQUIDE [FR]; AIR LIQUIDE DEUTSCHLAND GMBH [DE]; MESSER GROUP GMBH) 19 July 2006 (2006-07-19) * the whole document * ----- | 1-9 | INV. F17C1/00 F17C5/06 F17C9/02 F17C13/02 B67D1/00 |
| X | US 2008/178610 A1 (WHITCHER DOUGLAS [US] ET AL) 31 July 2008 (2008-07-31) * paragraphs [0030] - [0034]; figure 4 * ----- | 11-15 | |
| X | WO 2008/152634 A1 (ARBEL MEDICAL LTD [IL]; LEVIN ALEXANDER [IL]; TOUBIA DIDIER [IL]; KAGA) 18 December 2008 (2008-12-18) * abstract; figures 1-12 * ----- | 11-15 | |

TECHNICAL FIELDS
SEARCHED        (IPC)

F17C

The present search report has been drawn up for all claims

| Place of search | Date of completion of the search | Examiner |
|---|---|---|
| Munich | 13 May 2011 | Nicol, Boris |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    EP 10 19 5461

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2011

| Patent document cited in search report | | Publication date | Patent family member(s) | | Publication date |
|---|---|---|---|---|---|
| EP 1680620 | A1 | 19-07-2006 | CN | 1867799 A | 22-11-2006 |
| | | | WO | 2005043033 A1 | 12-05-2005 |
| | | | JP | 2007537397 T | 20-12-2007 |
| | | | US | 2007017597 A1 | 25-01-2007 |
| US 2008178610 | A1 | 31-07-2008 | AU | 2008210573 A1 | 07-08-2008 |
| | | | CN | 101594910 A | 02-12-2009 |
| | | | EP | 2109482 A2 | 21-10-2009 |
| | | | JP | 2010516976 T | 20-05-2010 |
| | | | WO | 2008094926 A2 | 07-08-2008 |
| WO 2008152634 | A1 | 18-12-2008 | US | 2008307800 A1 | 18-12-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1414359 A
- US 3645291 A
- GB 2277370 A